# FASCICULE DE BREVET EUROPEEN

(11) **EP 3 879 194 B1**
(45) Date de publication et mention de la délivrance du brevet: **13.12.2023**
(21) Numéro de dépôt: 21159339.7
(22) Date de dépôt: 25.02.2021
(51) Int. Cl.: F24F 5/00, F24F 11/52

(54) **DISPOSITIF À POCHES RÉFRIGÉRANTES**
KÜHLBEUTELVORRICHTUNG
DEVICE FOR COOLING BAGS

(30) Priorité: 12.03.2020 CH 2822020
(43) Date de publication de la demande: 15.09.2021
(73) Titulaire: Salamida-Vincent, Rose-Marie, 1205 Genève (CH)
(72) Inventeur: Salamida-Vincent, Rose-Marie, 1205 Genève (CH)
(74) Mandataire: Cabinet Laurent & Charras

(56) Documents cités:
- WO-A1-2020/010190
- WO-A2-2019/088946
- CN-A- 106 594 922
- US-A- 1 874 843
- US-A- 4 860 556
- US-A- 5 737 938
- US-B1- 6 192 702

## Description

### DOMAINE TECHNIQUE DE L'INVENTION

L'invention concerne un dispositif à poches réfrigérantes pour appareil pour propulser de l'air choisi parmi un ventilateur, un ventilateur plafond, un ventilateur tour, une bouche d'aération.

### ETAT DE LA TECHNIQUE

Actuellement les dispositifs utilisés pour rafraîchir l'air dans un intérieur en cas de température ambiante élevée sont essentiellement des ventilateurs ou des climatiseurs.

Les ventilateurs brassent l'air, tandis que les climatiseurs, qui sont bruyants, rafraîchissent l'air en rejetant de l'air chaud à l'extérieur du local et souvent laissent des traces inesthétiques sur les parois externes des bâtiments.

Avec le changement climatique et son corollaire, la hausse des températures et la multiplication des canicules, même dans des zones tempérées, on assiste chaque été à une augmentation significative des ventes de ventilateurs et climatiseurs.

Les ventilateurs sont d'une efficacité limitée puisqu'ils ne rafraichissent pas l'air, tandis que pour rafraîchir un intérieur les climatiseurs rejettent à l'extérieur du local de l'air chaud, aggravant ainsi les émissions de carbone qui sont le principal facteur déclenchant ce cercle vicieux de hausse des températures - hausse de l'usage des climatiseurs - hausse des émissions carbone et enfin augmentation du réchauffement climatique.

Par conséquent, il est nécessaire de trouver une alternative au moyens existants pour rafraîchir l'air, en particulier dans un intérieur, tout en limitant l'impact écologique.

Les documents WO2019/088946, US 4 860 556, WO2020/010190 et CN 106 594 922 décrivent des poches réfrigérantes configurées pour être attachées à un ventilateur pour rafraîchir l'air qu'il souffle.

Le document US5737938 décrit un dispositif selon le préambule de la revendication 1.

Cependant les performances de ces systèmes laissent à désirer, notamment quant à la température de l'air refroidi.

### OBJET DE L'INVENTION

Un objet de la présente invention est donc de résoudre, ou au moins de minimiser les inconvénients des dispositifs existants décrits ci-dessus.

Cet objet est au moins partiellement atteint par la présente invention.

A cet effet, la présente invention se rapporte à dispositif à poches réfrigérantes selon la revendication 1.

L'alternance des perforations allonge le parcours de l'air et améliore ainsi le refroidissement du flux à compacité et fonctionnement similaire par rapport aux dispositifs à poches identiques empilées.

Les poches sont en plastique ou tout autre matériau imperméable contenant de l'eau ou un gel qui, après avoir été placée dans un congélateur pour congeler, sera fixée au moyen d'un support en matériau rigide en face de l'appareil pour propulser de l'air, par exemple un ventilateur/ventilateur au plafond/bouche d'aération.

Lesdites poches présentent les mêmes dimensions et la même forme que l'appareil pour propulser l'air, en particulier une dimension qui correspond au flux d'air ventilé par ledit appareil, par exemple une forme de disque pour un ventilateur à pales ou un rectangle pour un ventilateur tour, les formes de fantaisie n'étant pas exclues.

Une des poche lorsqu'elle est rectangulaire peut être composée de plusieurs segments rectangulaires pliables dans le congélateur pour le refroidissement et dépliables pour une utilisation devant un ventilateur tour.

Les poches sont munies de perforations pour permettre le passage de l'air propulsé par ledit appareil à travers lesdites perforations.

Les moyens de fixation des poches réfrigérantes au support placé devant ledit appareil sont choisis parmi les lanières, notamment les lanières incorporant un clip ou un velcro, ou tout autre moyen de fixation permettant l'accrochage de ladite poche au support.

Les poches sont munies d'une languette permettant d'indiquer la température ou le stade de congélation/décongélation par un jeu de couleurs.

En intercalant plusieurs poches réfrigérantes face à l'arrivée d'air de l'appareil, on obtiendra une fraicheur constante et accrue en changeant les poches au fur et à mesure qu'elles décongèlent et tiédissent.

Le dispositif prévoit une disposition alternée de perforations pour faciliter la circulation et le refroidissement de l'air.

Le dispositif comprend en outre un filtre à air combiné à l'une desdites poches. Le filtre à air peut être intercalé entre deux poches ou combiné à une poche unique. Cela permet une dépuration de l'air sans autre dépense énergétique supplémentaire.

Un ventilateur/un ventilateur au plafond/une bouche d'aération incluant d'emblée un support pour poches réfrigérantes pourra également être produit.

Les poches sont placées à quelques centimètres de distance afin de permettre la circulation de l'air propulsé par le ventilateur/ventilateur au plafond /bouche d'aération.

La poche réfrigérante est plus hygiénique qu'un climatiseur puisque l'usage de la poche réfrigérante combinée à l'appareil, ventilateur ou bouche d'aération, évite de faire circuler de l'air vicié souvent produit par le climatiseur.

La poche est lavable comme un ustensile de cuisine et est donc réutilisable à volonté.

Selon la présente invention, les poches réfrigérantes permettent de rafraîchir l'air ambiant sans produire les émissions de carbone habituellement rejetées par un climatiseur pour refroidir la température d'un intérieur.

La présente invention limite la dépense énergétique pour rafraichir un intérieur, car elle dépend uniquement de l'énergie nécessaire au fonctionnement de l'appareil, par exemple un ventilateur/un ventilateur au plafond/une bouche d'aération et d'un congélateur pour congeler lesdites poches.

### BRÈVE DESCRIPTION DES FIGURES

D'autres avantages, buts et caractéristiques particuliers de l'invention ressortiront de la description non limitative qui suit des exemples ne faisant pas partie de l'invention mais illustrant certaines caractéristiques, en regard des dessins annexes, dans lesquels
- La figure 1 représente le schéma d'un exemple d'une poche réfrigérante pour un dispositif selon l'invention ;
- La figure 2 représente un premier exemple illustrant certaines caractéristiques de l'invention mais ne faisant pas partie de l'invention ;
- La figure 3 représente un deuxième exemple illustrant certaines caractéristiques de l'invention mais ne faisant pas partie de l'invention.

### DESCRIPTION D'EXEMPLES DE RÉALISATION DE L'INVENTION

La présente description est donnée à titre non limitatif, chaque caractéristique d'un exemple pouvant être combinée à toute autre caractéristique de tout autre exemple de manière avantageuse, l'invention étant cependant définie dans les revendications.

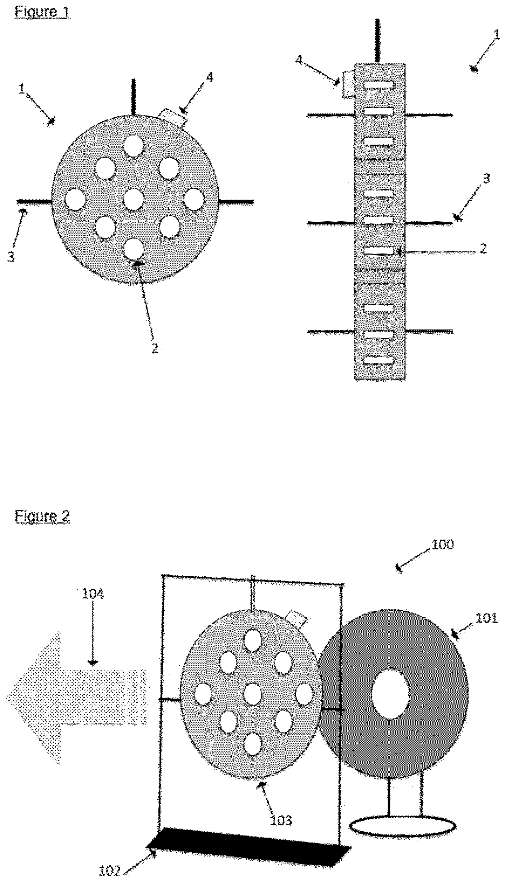

La figure 1 montre le schéma d'un exemple de poche réfrigérante 1 qui peut être utilisée dans un dispositif selon l'invention. La poche 1 est munie de perforations 2 et de lanières 3 (moyens de fixation) et d'une languette indiquant la température 4.

La figure 2 montre un premier exemple ne faisant pas partie de l'invention comprenant un dispositif 100. Le dispositif 100 comprend un ventilateur 101 qui est un exemple d'appareil pour propulser de l'air. Le ventilateur 101 est combiné à un support 102 pour une poche réfrigérante 103. Le support 102 est dans cet exemple séparé du ventilateur 101.

La flèche 104 représente le sens de l'air propulsé par le ventilateur 101 et qui passe à travers les perforations de la poche réfrigérante 103 pour y être refroidi.

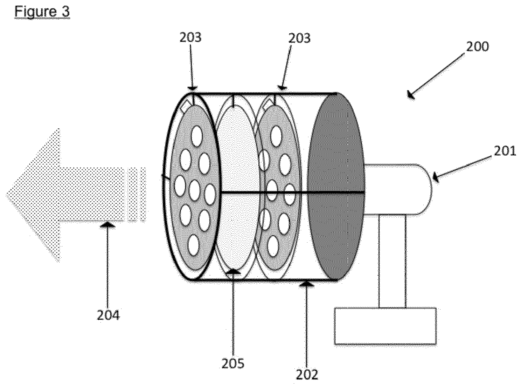

La figure 3 montre un deuxième exemple ne faisant pas partie de l'invention comprenant un dispositif 200. Le dispositif 200 comprend un ventilateur 201 qui est un exemple d'appareil pour propulser de l'air. Le support 202 pour plusieurs poches réfrigérantes 203 et un filtre à air 205 est fixé à un ventilateur 201 dans cet exemple.

La flèche 204 représente le sens de l'air propulsé par le ventilateur 201 et qui passe à travers les perforations des poches réfrigérantes 203 pour y être refroidi.

Le dispositif 200 comprend en outre un filtre à air 205 inséré entre deux poches réfrigérantes 203. Le filtre à air 205 est également fixé sur le support 202.

## Revendications

1. Dispositif à poches réfrigérantes (1, 103, 203) pour appareil (101, 201) pour propulser de l'air choisi parmi un ventilateur, un ventilateur plafond, un ventilateur tour, une bouche d'aération,
ledit dispositif comprenant des poches réfrigérantes (1,103, 203) en plastique ou tout autre matériau imperméable et lavable contenant de l'eau ou un gel apte à être congelé et décongelé,
ledit dispostif comprenant un support (102, 202) en matériau rigide configuré pour être fixé ou posé devant l'appareil pour propulser l'air (101, 201), auquel lesdites poches (1,103, 203) sont configurées pour être fixées par des moyens de fixation (3), de façon à rafraîchir l'air propulsé par l'appareil (101, 201), dans lequel les poches (1,103,203) sont munies de perforations (2) pour permettre le passage de l'air propulsé par ledit appareil (101,201) à travers lesdites perforations (2),
**caractérisé en ce que** le dispositif comprend plusieurs desdites poches (1,103,203) fixées sur ledit support (202) qui présentent des perforations (2) alternées pour faciliter la circulation et le refroidissement de l'air.

2. Dispositif à poches réfrigérantes pour ventilateur (1,103, 203) selon la revendication 1, dans lequel les moyens de fixation au support (102, 202) sont choisis parmi les lanières, notamment les lanières (3) incorporant un clip ou un velcro, ou tout autre moyen de fixation permettant l'accrochage desdites poche (1,103, 203) au support (102, 202).

3. Dispositif à poches réfrigérantes pour ventilateur (1,103, 203) selon la revendication 1, dans lequel les poches (1,103, 203) sont munies d'une languette (4) permettant d'indiquer la température ou le stade de congélation/décongélation par un jeu de couleurs.

4. Dispositif à poches réfrigérantes pour ventilateur (1,103, 203) selon la revendication 1, dans lequel le support (102, 202) est incorporé audit appareil (101, 201) ou est séparé dudit appareil (101, 201).

5. Dispositif à poches réfrigérantes pour ventilateur (1, 103, 203) selon la revendication 1, laquelle s'ajoute en outre un filtre à air (205) combiné à une desdites poches (1, 203).

6. Dispositif à poches réfrigérantes pour ventilateur (1,103, 203) selon la revendication 1, dans lequel lesdites poches (1,103, 203) présentent les mêmes dimensions et la même forme que l'appareil (101, 201) pour propulser l'air, en particulier une dimension complémentaire au flux d'air ventilé par ledit appareil, par exemple une forme de disque pour un ventilateur à pales ou un rectangle pour un ventilateur tour.

7. Dispositif à poches réfrigérantes pour ventilateur (1,103, 203) selon la revendication 7, dans lequel les poches (1,103, 203) lorsqu'elles sont rectangulaires sont constituées de plusieurs rectangles repliés les uns sur les autres pour être pliée dans un congélateur.

## Patentansprüche

1. Kühlbeutelvorrichtung (1, 103, 203) für ein Gerät (101, 201) zum Umwälzen von Luft, ausgewählt aus einem Ventilator, einem Deckenventilator, einem Turmventilator, einer Belüftungsöffnung, wobei die Vorrichtung Kühlbeutel (1, 103, 203) aus Kunststoff oder einem anderen undurchlässigen und abwaschbaren Material umfasst, die Wasser oder ein Gel enthalten, das tiefgefroren und wieder aufgetaut werden kann, wobei die Vorrichtung umfasst
einen Träger (102, 202) aus starrem Material, der so konfiguriert ist, dass er vor dem Gerät zum Umwälzen von Luft (101, 201) befestigt oder aufgestellt werden kann, an dem die Beutel (1, 103, 203) so konfiguriert sind, dass sie durch Befestigungsmittel (3) befestigt werden können, um die durch das Gerät (101, 201) umwälzte Luft zu kühlen,
wobei die Beutel (1, 103, 203) mit Perforationen (2) versehen sind, um den Durchlass der von dem Gerät (101, 201) umwälzten Luft durch die Perforationen (2) zu ermöglichen,
**dadurch gekennzeichnet, dass** die Vorrichtung mehrere der Beutel (1, 103, 203) umfasst, die an dem Träger (202) befestigt sind und wechselweise Perforationen (2) aufweisen, um die Zirkulation und Kühlung der Luft zu erleichtern.

2. Ventilator-Kühlbeutelvorrichtung (1, 103, 203) nach Anspruch 1, wobei die Befestigungsmittel am Träger (102, 202) aus Riemen, insbesondere aus Riemen (3) mit eingearbeitetem Klammer- oder Klettverschluss, oder anderen Befestigungsmitteln ausgewählt sind, die das Aufhängen der Beutel (1, 103, 203) am Träger (102, 202) ermöglichen.

3. Ventilator-Kühlbeutelvorrichtung (1, 103, 203) nach Anspruch 1, wobei die Beutel (1, 103, 203) mit einer Zunge (4) versehen sind, mit der die Temperatur oder das Gefrier-/Auftau-Stadium durch ein Farbschema angezeigt werden kann.

4. Ventilator-Kühlbeutelvorrichtung (1, 103, 203) nach Anspruch 1, wobei der Träger (102, 202) im Gerät (101, 201) eingebaut oder vom Gerät (101, 201) getrennt ist.

5. Ventilator-Kühlbeutelvorrichtung (1, 103, 203) nach Anspruch 1, wobei außerdem ein Luftfilter (205) hinzugefügt wird, der mit einem der Beutel (1, 203) kombiniert ist.

6. Ventilator-Kühlbeutelvorrichtung (1, 103, 203) nach Anspruch 1, wobei die Beutel (1, 103, 203) die gleichen Abmessungen und die gleiche Form wie das Gerät (101, 201) zum Umwälzen der Luft aufweisen, insbesondere eine Abmessung, die komplementär zu dem von dem Gerät geführten Luftstrom ist, beispielsweise eine Scheibenform für einen Schaufelventilator oder ein Rechteck für einen Turmventilator.

7. Ventilator-Kühlbeutelvorrichtung (1, 103, 203) nach Anspruch 7, wobei die Beutel (1, 103, 203), wenn sie rechteckig sind, aus mehreren übereinander gefalteten Rechtecken bestehen, um in einem Gefrierschrank zusammengefaltet zu werden.

## Claims

1. Cooling bag device (1, 103, 203) for an appliance (101, 201) for propelling air selected from a fan, a ceiling fan, a tower fan, an air vent, said device comprising cooling bags (1, 103, 203) made of plastic or any other waterproof and washable material containing water or a gel capable of being frozen and thawed, said device comprising
a holder (102, 202) of rigid material configured to be fixed or placed in front of the apparatus for propelling air (101, 201), to which said pockets (1, 103, 203) are configured to be fixed by fixing means (3), so as to cool the air propelled by the apparatus (101, 201),
wherein the bags (1, 103, 203) are provided with perforations (2) to allow the passage of air propelled by said apparatus (101, 201) through said perforations (2),
**characterised in that** the device comprises several of said pockets (1, 103, 203) fixed to said holder (202) which have alternating perforations (2) to facilitate the circulation and cooling of the air.

2. Fan cooling bag device (1, 103, 203) according to claim 1, wherein the means for fixing to the holder (102, 202) is selected from straps, including straps (3) incorporating a clip or Velcro, or any other fixing means for hooking said bags (1, 103, 203) to the holder (102, 202).

3. Fan cooling bag device (1, 103, 203) according to claim 1, wherein the bags (1, 103, 203) are provided with a tab (4) for indicating the temperature or the freezing/thawing stage by a colour scheme.

4. Fan cooling bag device (1, 103, 203) of claim 1, wherein the holder (102, 202) is incorporated into or separated from said apparatus (101, 201).

5. Fan cooling bag device 1, 103, 203) according to claim 1, further including an air filter (205) combined with one of said bags (1, 203),

6. Fan cooling bag device (1, 103, 203) according to claim 1, wherein said bags (1, 103, 203) have the same dimensions and shape as the apparatus (101, 201) for propelling air, in particular a dimension complementary to the airflow ventilated by said apparatus, for example a disc shape for a bladed fan or a rectangle for a tower fan.

7. Fan cooling bag device (1, 103, 203) according to claim 7, wherein the bags (1, 103, 203), when rectangular, are made of a plurality of rectangles folded over each other to be folded in a freezer.
